# EUROPÄISCHE PATENTANMELDUNG

(11) **EP 0 810 706 A2**
(43) Veröffentlichungstag der Anmeldung: **03.12.1997**
(21) Anmeldenummer: 97108341.5
(22) Anmeldetag: 22.05.1997
(51) Int. Cl.: H02H 3/087

(54) **Spannungsversorgungsnetz**

(30) Priorität: 31.05.1996 DE 19622064
(71) Anmelder: SIEMENS AKTIENGESELLSCHAFT, 80333 München (DE)
(72) Erfinder: Graf, Alfons, Dr.-Ing., 86916 Kaufering (DE); Brauschke, Peter, Dipl.-Ing., 82110 Germering (DE)

(57) **Zusammenfassung**

Das erfindungsgemäße Spannungsversorgungsnetz mit einer Spannungsquelle und daran angeschlossenen Lasten weist anstelle einer Sicherung in den Zuleitungen zu den Lasten jeweils in möglichst unmittelbarer Nähe zur Spannungsquelle einen intelligenten Leistungshalbleiterschalter auf.

## Beschreibung

Die vorliegende Erfindung betrifft ein Spannungsversorgungsnetz mit einer Spannungsquelle und daran angeschlossenen Lasten.

Insbesondere in KFZ-Bordnetzen werden zunehmend Leistungshalbleiterschalter verwendet. Sie sind oftmals in der Nähe der zu schaltenden Lasten oder in der zu schaltenden Last integriert. Dies hat den Vorteil, daß die Schalter prinzipiell in der Lage sind, Kurzschlüsse und Überlasten sicher abzuschalten. Jedoch sind nur die Leitungen nach dem Halbleiterschalterausgang geschützt, nicht jedoch die Zuleitungen zum Schalter selbst. Aus diesem Grund sind in typischen Standardnetzen, wie z. B. einem KFZ-Bordnetz zusätzlich meist Schmelzsicherungen direkt an die Energiequelle, d. h. die Batterie eingesetzt, um die Leitungen zum Schalter zu schützen. Bei derartigen Konzepten kann auf die Sicherungen nicht verzichtet werden. Der Aufbau ist meistens derart, das Schalter, Sicherungen und Lasten sich an verschiedenen Orten befinden und die Schalter dezentral montiert oder zu kleinen Einheiten zusammengefaßt werden. Bei Bus-Eingängen benötigt entweder jeder Schalter oder die Schaltereinheiten einen Bus-Dekoder.

Aufgabe der vorliegenden Erfindung ist es, ein einfacheres System anzugeben, bei dem auf Schmelzsicherungen verzichtet werden kann.

Diese Aufgabe wird durch den kennzeichnenden Teil des Anspruches 1 gelöst. Weiterbildungen sind in Unteransprüchen gekennzeichnet.

Erfindungsgemäß wird anstelle einer jeden Sicherung ein Leistungshalbleiter eingesetzt, der sich wie zuvor die Sicherung in möglichst unmittelbarer Nähe zur Spannungsquelle, d. h. z. B. zur Batterie, befindet.

Vorteilhafterweise können eine Vielzahl derartiger Halbleiterschalter in einem Halbleiter-Sicherungskasten zusammengefaßt werden, welcher dann wiederum in möglichst unmittelbarer. Nähe zur Batterie installiert ist.

Die Erfindung wird nachfolgend anhand einer Figur näher erläutert.

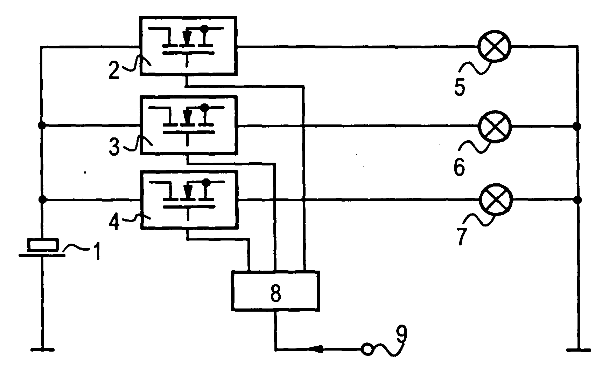

In der Figur ist mit 1 eine Batterie dargestellt, deren negativer Pol mit Masse verbunden ist. Der positive Pol ist jeweils mit den Eingängen von hier z. B. drei Halbleiterschaltern 2, 3, 4 verschaltet. Deren Ausgänge sind jeweils über entsprechende Lasten 5, 6 und 7 mit Masse verbunden. Die AnSteuerung der Halbleiterschalter 2, 3, 4 erfolgt hier über einen Dekoder 8, dessen Eingang mit einer Klemme 9 verbunden ist, an der das Ansteuersignal anlegbar ist.

Die Schalter 2, 3, 4 befinden sich hier z. B. in einer zentralen Einheit sehr nahe an der Batterie 1, so daß die Zuleitungen zwischen Batterie 1 und Halbleiterschaltern 2, 3, 4 keinen besonderen Schutz benötigen.

Die Leitungen zur Last werden von den Halbleiterschaltern selbst geschützt. Dabei sollten die Halbleiterschalter vorzugsweise als intelligente Halbleiterschalter ausgeführt sein, die einen Schutz gegen Übertemperatur, Überlast, Unterlast usw. aufweisen können. Somit können Sicherungen in der erfindungsgemäßen Ausführungsart vollständig entfallen. Bei dieser Ausführungsform muß zu jeder Last 5, 6, 7 eine eigene Leitung geführt werden. Diese Leitung kann aber aufgrund des optimalen Schutzes durch den Leistungshalbleiter 2, 3, 4 im Querschnitt optimiert werden, um somit Gewicht und Kosten zu sparen. Wenn der Leistungshalbleiterschalter gegen Kurzschluß und Überlast geschützt ist, wie zuvor erwähnt, trifft dies auch für die einzelnen Zuleitungen zu den Lasten 5, 6, 7 zu. Gerade der Überlastfall wird aber bei bisherigen KFZ-Bordnetzen mit Sicherungen nur mangelhaft gestützt.

Ein weiterer Vorteil ergibt sich, daß durch die zentrale Montage der Halbleiterschalter 2, 3, 4 eine Bus-Steuerung der Eingänge ermöglicht wird, wie sie im dargestellten Ausführungsbeispiel realisiert wird. Hierzu dient der Bus-Dekoder 8, der aufgrund seiner Ansteuerung, den jeweiligen Halbleiterschalter mit dem jeweils notwendigen Steuersignal über die Klemme 9 versorgt. Auf diese Weise wird nur ein einziger Bus-Dekoder für die als Einheit zusammengefaßten Halbleiterschalter 2, 3, 4 verwendet.

Die vorliegenden Erfindung ist insbesondere für KFZ-Bordnetze oder im Industriebereich einsetzbar.

## Patentansprüche

1. Spannungsversorgungsnetz mit einer Spannungsquelle und daran angeschlossenen Lasten,
**dadurch gekennzeichnet,**
daß als Sicherung in den Zuleitungen der Lasten (5, 6, 7) jeweils in möglichst unmittelbarer Nähe zur Spannungsquelle (1) ein intelligenter Leistungshalbleiterschalter (2, 3, 4) eingesetzt wird.

2. Spannungsversorgungsnetz nach Anspruch 1,
**dadurch gekennzeichnet,**
daß das Spannungsversorgungsnetz in einem Kraftfahrzeug eingesetzt wird und die Spannungsquelle (1) eine Autobatterie ist.

3. Spannungsversorgungsnetz nach einem der vorhergehenden Ansprüche,
**dadurch gekennzeichnet,**
daß die Leistungshalbleiter parallel oder über einen Bus angesteuert werden.

4. Spannungsversorgungsnetz nach einem der vorhergehenden Ansprüche,
**dadurch gekennzeichnet,**
daß der Leistungshalbleiterschalter einen Temperaturschutz und/oder einen Überlast- und/oder einen Unterlastschutz aufweist.
